# NEUE EUROPÄISCHE PATENTSCHRIFT

(11) **EP 0 939 962 B2**
(45) Veröffentlichungstag und Bekanntmachung des Hinweises auf die Entscheidung über den Einspruch: **08.07.2009**
(45) Hinweis auf die Patenterteilung: 21.04.2004
(21) Anmeldenummer: 97951184.7
(22) Anmeldetag: 13.11.1997
(51) Int. Cl.: H01F 41/12, B29C 35/08, H02K 15/12

(54) **VERFAHREN ZUR TRÄNKUNG VON BAUTEILEN**
METHOD OF IMPREGNATING COMPONENTS
PROCEDE D'IMPREGNATION DE COMPOSANTS

(30) Priorität: 21.11.1996 DE 19648133
(43) Veröffentlichungstag der Anmeldung: 08.09.1999
(73) Patentinhaber: Altana Electrical Insulation GmbH, 46483 Wesel (DE)
(72) Erfinder: LIENERT, Klaus-Wilhelm, D-22763 Hamburg (DE); HEGEMANN, Günter, D-22301 Hamburg (DE); BLUM, Rainer, D-67069 Ludwigshafen (DE); EICHHORST, Manfred, D-22113 Oststeinbek (DE)
(74) Vertreter: Fitzner, Uwe
(86) Internationale Anmeldenummer: PCT/EP1997/006324
(87) Internationale Veröffentlichungsnummer: WO 1998/022961

(56) Entgegenhaltungen:
- EP-A- 0 643 467
- WO-A1-94/10223
- WO-A1-97/25362
- DE-A- 19 542 564
- US-A- 3 914 467
- PATENT ABSTRACTS OF JAPAN vol. 095, no. 006, 31.Juli 1995 & JP 07 067302 A (TOSHIBA CORP), 10.März 1995,
- PATENT ABSTRACTS OF JAPAN vol. 095, no. 006, 31.Juli 1995 & JP 07 067300 A (TOSHIBA CORP), 10.März 1995,
- PATENT ABSTRACTS OF JAPAN vol. 011, no. 055 (E-481), 20.Februar 1987 & JP 61 214749 A (TOSHIBA CORP), 24.September 1986,

## Beschreibung

Die Erfindung betrifft ein Verfahren zur Tränkung von Bauteilen mit monomerenfreien nicht radikalisch polymerisierenden Tränkmitteln, die bei Raumtemperatur flüssig sind oder durch Erwärmen verflüssigt werden können und die durch eine kombinierte Anwendung von Wärme und energiereicher Strahlung härtbar sind.

Verfahren zur Tränkung von Bauteilen mit polymerisierbaren Tränkmitteln, die durch Wärme und/oder durch energiereiche Strahlung härtbar sind, sind bekannt.

DE-A-40 22 235 und DD-A-295 056 schlagen vor, übliche Tränkmittel mit hohem Anteil an Monomeren wie Styrol zu verwenden und nach der Tränkung zunächst mit UV-Strahlen die Oberflächen zu härten und dann durch Wärmezufuhr das Innere der Bauteile zu härten. Diese Verfahren reduzieren zwar die Abdampfverluste, die aber durch die hohen Anteile flüchtiger, nicht polymerisierter Monomeren im Innern der Bauteile noch immer relativ hoch sind. Wege, die ungleichmäßige Tränkmittelverteilung im Bauteil zu beeinflussen, werden in diesen Schriften nicht erwähnt.

EP-A-0 643 467 schlägt vor, übliche Tränkmittel mit hohem Anteil an Monomeren wie Styrol zu verwenden und zur Verbesserung der Tränkmittelverteilung im Bauteil schon während der Tränkung über Spulenheizung eine Vorgelierung und Fixierung des Tränkmittels und eine thermische Härtung zu erhalten. Gleichzeitig mit der thermischen Härtung des Tränkmittels auf den Wicklungen oder aber nach dessen thermischer Härtung auf den Wicklungen sollen solche Stellen der Bauteile, die durch die Wicklungsheizung nicht erreicht wurden, mit energiereicher Strahlung, bevorzugt UV-Strahlung, gehärtet werden. Ein Nachteil dieses Verfahrens liegt darin, daß durch die Heizung über die Wicklungen thermisch nur eine Teilhärtung durchgeführt wird und die Aushärtung danach mit Strahlen erfolgt. Da alle bekannten Bauteile Stellen aufweisen, die bei einer thermischen Teilhärtung nicht erreicht werden und bei einer Nachhärtung mit Strahlen im abgeschatteten Bereich liegen, weisen Bauteile, die nach EP-A-0 643 467 behandelt wurden, immer Bereiche auf, an denen das Tränkmittel nur unzureichend gehärtet ist. Aus diesen Bereichen kommt es dann zu unerwünschten Emissionen und das Tränkmittel kann dort seine Funktionen nur unzureichend erfüllen.
Eine ebenfalls nach EP-A-0 643 467 vorgeschlagene Vorgehensweise, nach der thermischen Härtung mit energiereichen Strahlen zu härten, erscheint technisch wenig sinnvoll, da eine solche Härtung nach einer thermischen Durchhärtung der im ersten Schritt der Teilhärtung nicht erreichten Stellen des Bauteils, unabhängig davon, ob sie durch eine ausreichend lange Stromheizung der Wicklung oder durch sonstige Aufbringung von Wärme erfolgte, keine erkennbaren Vorteile bringt.
Desweiteren enthält EP-A-0 643 467 keine Lehre zur Anwendung des Verfahrens bei den allgemein beanspruchten Techniken zur Tränkung. So ist eine Vorgelierung durch Beheizung der Wicklungen während der Tränkung nicht sinnvoll, weil die Füllung der Hohlräume undefinierbar erfolgt. Eine Vorheizung der Wicklungen zur Erniedrigung der Viskosität des Tränkmittels und damit zur Beschleunigung der Befüllung des Bauteils mit Tränkmittel ist bekannter Stand der Technik, z.B. bei den verschiedenen Tauch- und Flutverfähren, bei denen die Bauteile erwärmt werden, um eine Viskositätserniedrigung und somit bessere und schnellere Befüllung zu erreichen. Ein Erwärmen bis zur Gelierung während der Tränkung-bewirkt das Gegenteil, nämlich eine gelierungsbedingte undefinierte Füllung der Hohlräume.

Der Vorgang einer Gelierung während der Tränkung ist nur bei absoluter Konstanz der Tränkmitteleigenschaften und aller Verfahrensparameter vorstellbar, bleibt aber immer sehr störanfällig. Schon bei geringen Abweichungen können auch Innenbereiche der Wicklungen durch vorgeliertes Tränkmittel abgeschirmt werden und dadurch unbefüllt bleiben. Die in EP-A-0 643 467 vorgeschlagene Wicklungsvorheizung, beispielsweise auf 180°C, führt schon beim Eintauchen zu undefinierten Gelierungen auf der heißen Wicklung und starker Ungleichverteilung des Tränkmittels im Bauteil. Eine geringere Vorwärmung reduziert zwar die Tränkmitteltemperatur in unmittelbarer Nähe der Wicklung und erleichtert dadurch den Tränkvorgang. Sobald jedoch die Vorwärmtemperatur soweit erhöht wird, daß beim Tränken Gelierung erreicht wird, kommt es auch hier zur Ungleichverteilung des Tränkmittels.

Die polymeren Bestandteile bekannter Tränk-, Vergußund Überzugsmassen für elektrotechnische Bauteile, wie beispielsweise Motorwicklungen oder Transformatorwicklungen, sind vorzugsweise ungesättigte Polyester, die in vinylisch ungesättigten Verbindungen, wie Styrol, Vinyltoluol, Allylphthalat und monomeren oder oligomeren Acryl- oder Vinylestern gelöst sind, welche radikalisch (co)polymerisiert werden.
Unter Tränk-, Verguß- und Überzugsmassen werden im allgemeinen Harzmassen verstanden, die in der Elektrotechnik zur Tränkung von Wicklungen angewendet werden, wobei die allgemein bekannten Verfahren, wie beispielsweise die Tauchtränkung, die Träufeltechnik, das Tauchrollieren und das Überfluten, zur Anwendung kommen, wobei diese Verfahren gegebenenfalls durch Anwendung von Vakuum und/oder Druck unterstützt werden.

Nachteile dieser Verfahren nach dem Stand der Technik ergeben sich aus den ungesättigten Monomeren, die für eine schnelle und vollständige Aushärtung der Massen zwingend notwendig sind. Solche Stoffe sind z.B. monomere oder niedermolekular oligomerisierte Acrylate, Allylphthalat, Styrol, α-Methylstyrol und Vinyltoluol. Diese Stoffe sind gesundheitsschädlich und hautreizend. Bei bekannten Anwendungen von Tränkmitteln mit diesen Stoffen treten Abdampfverluste von 20 bis 30 Gew.-% auf. Solche erheblichen Mengen an verdunsteten Tränkmittelbestandteilen müssen von der Arbeitsstelle entfernt werden, um Gesundheitsgefahren für die Beschäftigten zu vermeiden. Die abgesaugten Verdunstungsmengen werden in der Regel in Abluftverbrennungen entsorgt, wobei unerwünschte Emissionen entstehen. Die verbrannten Tränkmittelbestandteile stellen auch unter wirtschaftlichen Aspekten erhebliche Verluste dar.

Weitere Probleme ergeben sich bei der Einstellung des optimalen Grades der Ausfüllung der im Bauteil insgesamt vorhandenen Hohlräume. In der Regel ist aus physikalischen Gründen ein möglichst hoher Füllgrad erwünscht, aus Kostengründen ist aber oft ein technisch gerade noch ausreichender Füllgrad erwünscht.

Bei niedrigviskosen Stoffen besteht die Gefahr, daß die Tränkmittel zu einem undefinierten Teil vor der Härtung aus den Bauteilen auslaufen oder sich sehr ungleichmäßige Tränkmittelverteilungen im Bauteil einstellen. Nach den bekannten Verfahren war es bisher nicht möglich, hohe Füllgrade, beispielsweise über 90%, zu verwirklichen.

Das erfindungsgemäße Verfahren löst die oben genannten Probleme durch die Merkmale gemäß Anspruch 1.

Mit dem erfindungsgemäßen Verfahren ist es erstmals möglich, praktisch an jeder Stelle der Bauteile eine weitgehend gleichmäßige Tränkmittelfüllung in beliebigem Füllgrad einzustellen. Die Emission flüchtiger Tränkmittelbestandteile wird solchermaßen vermindert, daß praktisch keine Maßnahmen zur Arbeits- und Abluftbehandlung mehr erforderlich sind. Die Wirtschaftlichkeit der Tränkung wird dadurch, daß fast keine Tränkmittelverluste auftreten, erheblich gesteigert. Besonders vorteilhaft ist dieses Verfahren bei Tauchimprägniertechniken, bei denen während der Teilhärtung, die in eingetauchtem Zustand erfolgt, durch Einstellung von Aufheizgeschwindigkeit, Temperatur und Heizzeit ein erwünschter Füllgrad des Bauteils eingestellt werden kann.

Bevorzugt kann dieses Verfahren beim Tauchen bei Raumtemperatur und Spulenheizung mit Stromwärme kurz vor, während oder nach dem Eintauchen angewandt werden. Es wird zunächst nur wenig erwärmt, um eine schnelle Befüllung der inneren Bauteilbereiche zu erhalten, dann wird im Tränkmittel die Temperatur erhöht. Dabei wird nur in der unmittelbaren Umgebung der beheizten Spulen eine Gelierung des Tränkmittels eingeleitet. Nach der Gelierung bzw. Anhärtung wird ausgetaucht und zweckmäßig nach einer Wartezeit, die von Form und Größe des Bauteils und der Viskosität des Tränkmittels abhängt, während der das ungelierte Tränkmittel ablaufen kann, welches bevorzugt nach Kühlung in den Tränkmittelvorrat rückgeführt wird, mit einer Kombination aus Wärme und energiereicher Strahlung, bevorzugt UV-Licht ausgehärtet. In welcher Reihenfolge dabei Wärme und energiereiche Strahlung eingesetzt werden, ist erfindungsgemäß offen und im Einzelfall zu optimieren, wobei Art und Form der Bauteile und/oder auch anlagentechnische Gegebenheiten eine Rolle spielen können. So ist bei vielen Bauteilen eine gute Beheizung der inneren Bereiche über Stomzufuhr auf eine elektrische Wicklung möglich, zur Härtung auch der äußeren Bereiche kann dann bevorzugt UV-Licht vor, gleichzeitig mit oder nach der Stromheizung aufgebracht werden. Bei Bauteilen, die Bereiche aufweisen, die sowohl durch Stromwärme als auch mit UV-Licht schlecht erreichbar sind ist es z.B. möglich, nach der Gelierung im Tränkmittel und nachfolgendem Abtropfen und gegebenenfalls einer weiteren Härtung mit einer Kombination aus Strom und Entklebung der Oberfläche mit UV-Licht, eine thermische Aushärtung im Ofen anzuwenden. Durch die Oberflächenentklebung, die teilweise schon bei einer Anvernetzung erreicht wird, ist ein problemloses und sicheres Umgehen mit den Bauteilen möglich. Bei kleineren Bauteilen ist es z.B. oft vorteilhaft, eine Anzahl zu sammeln und zu einem späteren Zeitpunkt z.B. in einer Wärmekammer auszuhärten.

Ein weiter Vorteil des erfindungsgemäße Verfahrens besteht darin, daß es auf vorhandenen oder nur geringfügig modifizierten Anlagen durchgeführt werden kann, da seine Durchführung im wesentlichen durch Änderung der Steuerungsparameter und der Verfahrensreihenfolge möglich ist.

Tränkmittel, mit denen das erfindungsgemäße Verfahren durchgeführt wird, sind solche Tränkmittel, die monomerenfreie nach einem nicht radikalischen Prozeß vernetzende Stoffe enthalten, auf Basis von dicyclopentadienmodifizierten Harzen, wie sie beispielsweise in der deutschen Patentanmeldung 14 542 564 A1 offenbart sind.

Die Auswahl der Stoffe zur Durchführung des erfindungsgemäße Verfahrens erfolgt unter Aspekten der technischen Eignung, Verfügbarkeit und/oder Kosten der Tränkmittel.

Das erfindungsgemäße Verfahren vermeidet die Nachteile der Verfahren des bekannten Standes der Technik durch die spezifische Kombination seiner Maßnahmen, nämlich durch die Verwendung der speziellen monomerenfreien Tränkmittel, durch die Einstellung der Tränkmittelverteilung und des Füllgrades durch gesteuerte Heizung der Bauteile nach der Tränkung bis zur Gelierung und Tränkmittelfixierung, das Ablaufenlassen des ungelierten Tränkmittels mit Rückführung in den Tränkmittelvorrat und die Härtung mit einer Kombination aus Wärme und energiereicher Strahlung, bevorzugt UV-Licht.

In einer besonders bevorzugten Ausführung der Erfindung wird bei Tränktechniken, bei denen die Bauteile ganz oder teilweise in die Tränkmittel eingebracht werden, nach dem Einbringen und nachdem die Bauteile das Tränkmittel aufgenommen haben, eine elektrische Aufheizung der Spulen bis zur Teilgelierung durchgeführt. Über Schnelligkeit, Höhe und Dauer dieser Heizung kann, in Abhängigkeit von der Reaktivität der Tränkmittel der Füllgrad sehr genau und reproduzierbar reguliert werden. Nach dieser Teilhärtung im getauchten Zustand werden die Bauteile aus dem Tränkmittel entnommen und das nicht nicht angelierte Tränkmittel abfließen lassen. In den meisten Fällen kann das abfließende Tränkmittel, gegebenenfalls nach Kühlung, in das Tränkbad zurückgeführt werden. Auch auf den Außenseiten der Bauteile (Blechpakete), auf denen in der Regel kein oder nur wenig Tränkmittel erwünscht ist, kann dabei das anhaftende Tränkmittel abfließen, wobei dieser Vorgang durch den allmählich nach außen dringende Wärmeabfluß der beheizten Bereiche unterstützt wird. Ein Vorteil der erfindungsgemäß eingesetzten monomerenfreien Harze ist dabei deren Härtungscharakteristik, bei der bis unmittelbar vor der Gelierung keine Harzschädigung auftritt, so daß abtropfendes Harz in den Vorrat zurückgeführt werden kann. Durch Einwirken von energiereicher, bevorzugt UV-Strahlung vor und während der thermischen Härtung werden die Oberflächen der Bauteile versiegelt, die Gesamtverluste an Tränkmittel sind deshalb in einem bisher nicht erreichten Maße gering.

Die folgenden Beispiele sollen die Erfindung veranschaulichen.

### Beispiele

Die Versuche wurden mit dem kommerziell verfügbaren monomerenfreien Tränkmittel Dobeckan MF 8001 UV ® durchgeführt, das sowohl thermisch als auch mit UV-Licht härtbar ist.
Bauteile waren Statoren von Großserienelektromotoren der Baugröße IEC 96, deren Wickelköpfe in einem Spritzgußteil aus Polyamidthermoplast fixiert sind.

Beurteilt werden
· Harzaufnahme, durch Wiegen des Bauteils vor der Tränkung und nach der Härtung,
· Abtropfverluste die wegen Angelierung nicht mehr rückführbar sind, durch Wiegen des bei der Härtung abtropfenden angelierten Tränkmittels,
· Abdampfverluste bei der Härtung, durch Wiegen des Bauteils vor und nach der Härtung, abzüglich der Abtropfverluste.

### Beispiel 1 (B1)

Bauteil und Tränkmittel haben Raumtemperatur von 26°C. Das Bauteil wird mit 100 mm/Minute eingetaucht, die Wicklung wird im Tauchbecken in 30 Sekunden auf 160°C geheizt und 1 Minute gehalten, dann wird mit der gleichen Geschwindigkeit wieder ausgetaucht und über dem Becken 10 Minuten abtropfen lassen. Das rückfließende Material ist erkennbar ungeliert, nach 10 Minuten tropft fast nichts mehr ab und in beiden Wickelköpfen ist augenscheinlich erkennbar eine gute Füllung vorhanden. Nun wird das Tauchbecken abgedeckt und die Wicklung über Stromwärme auf 180°C erwärmt und 10 Minuten gehalten, dabei werden 1 Minute vor Einschalten des Stromes mehrere um den Stator angeordnete Quecksilbermitteldruckbrennern mit einem Energiemaximum bei ca. 365 nm Wellenlänge und einer Bestrahlungsenergie von ca. 8 mJ/cm2 zugeschaltet.

Bei dieser Härtung treten nur noch einige Tropfen Tränkmittel aus dem Bauteil aus. Das Blechpaket erwärmt sich auf ca. 95°C und die Kunststoffteile der Wickelköpfe auf ca. 75°C. Blechpaket und Wickelköpfe sind nach dem Abkühlen klebfrei, auch in abgeschatteten Bereichen des Bauteils ist manuell keine Klebrigkeit mehr bemerkbar.

### Beispiel 2 (B2)

Es wird wie bei Beispiel 1 verfahren, aber im eingetauchten Zustand nur 30 Sekunden gehalten. Auch hier ist in beiden Wickelköpfen augenscheinlich erkennbar eine gute, aber geringere Füllung als bei B1 vorhanden, die weiteren Beobachtungen decken sich mit B1.

### Beispiel 3 (B3)

Es wird wie bei Beispiel 1 verfahren, aber im eingetauchten Zustand 2 Minuten gehalten. Hier ist in beiden Wickelköpfen augenscheinlich erkennbar eine sehr gute, und deutlich höhere Füllung als bei B1 vorhanden, die weiteren Beobachtungen decken sich mit B1.

| Nummer | Abtropfverlust [g] | Abdampfverlust [g] | Harzaufnahme [g] |
|---|---|---|---|
| B1 | 0,4 | 1,4 | 126 |
| B2 | 0,5 | 0,7 | 78 |
| B3 | 1,2 | 3,4 | 172 |

Die Statoren wurden zersägt um die Füllung beurteilen zu können. Das Bauteil laut B3 zeigt dabei eine perfekte Füllung von Nut und Wicklung, d.h. ca. 170g sind die maximal mögliche Harzaufnahme. Harzaufnahmen von ca 100% Füllgrad sind mit keinem anderen Verfahren nach dem Stand der Technik erreichbar. Die Abtropf- und Abdampfverluste sind dabei in einem ebenfalls bisher nicht erreichbaren Maße gering. Weiter ist es möglich, die Harzaufnahme z. B. aus Kostengründen, auf jeden gewünschten Füllgrad einzustellen.

## Patentansprüche

1. Verfahren zur Tränkung von Bauteilen mit Tränkmitteln, die bei Raumtemperatur flüssig sind oder durch Erwärmen verflüssigt werden können und durch eine kombinierte Anwendung von Wärme und energiereicher Strahlung härtbar sind, wobei die Bauteile bei Umgebungstemperatur oder in erwärmtem Zustand getränkt oder beim Tränken erwärmt werden, wobei die Wärmezufuhr während des Tränkens solchermaßen bemessen wird, daß eine Teilgelierung oder Teilhärtung des Tränkmittels erfolgt und vor, gleichzeitig mit oder nach einer thermischen Härtung mit energiereicher Strahlung behandelt werden, **dadurch gekennzeichnet, daß** monomerenfreie nicht radikalisch polymerisierende Tränkmittel verwendet werden, und daß die polymerisierbaren Tränkmittel Dicyclopentadien-Bausteine sowie Katalysatoren oder Katalysatorenmischungen enthalten, die eine Polymerisation sowohl durch Wärme als auch durch Strahlung auslösen, und wobei
die Bauteile Wicklungen aus elektrisch leitenden Materialien enthalten, die im Tränkmittel durch Anlegen von Strom soweit erhitzt werden, daß eine gewünschte Tränkmittelmenge geliert und fixiert wird, sowie daß nach dieser Gelierung die Bauteile aus dem Tränkmittel entnommen werden, ungeliertes Tränkmittel ablaufen lassen wird, welches gegebenenfalls gekühlt und zurückgeführt wird.

2. Verfahren nach Anspruch 1, **dadurch gekennzeichnet, daß** die Tränkung durch Tauchen, Fluten, Vakuumtränken, Vakuumdrucktränken oder Träufeln erfolgt.

3. Verfahren nach einem der Ansprüche 1 oder 2, **dadurch gekennzeichnet, daß** UV-, Infrarot- und/oder Elektronenstrahlung als energiereiche Strahlung verwendet werden.

4. Verfahren nach Anspruch 3, **dadurch gekennzeichnet, daß** Infrarotstrahlung auch vor, gleichzeitig mit oder nach dem Härten durch eine andere Art der Energiezufuhr angewandt wird.

5. Verfahren nach einem der Ansprüche 1 bis 4, **dadurch gekennzeichnet, daß** das Erwärmen der Tränkmittel durch Anlegen von elektrischem Strom an die Wicklungen aus elektrisch leitfähigem Material erfolgt.

6. Verfahren nach einem der Ansprüche 1 bis 5, **dadurch gekennzeichnet, daß** die polymerisierbaren Tränkmittel vorpolymerisierte Stoffe enthalten; die ionisch, durch Wasserstoffübertragung, durch Polyaddition, Polykondensation, Cyclokondensation und/oder Diels-Alder-Kondensation polymerisierbar sind.

7. Verfahren nach einem der Ansprüche 1 bis 6, **dadurch gekennzeichnet, daß** die elektrische leitfähige Wicklungen vor Aufbringen des Tränkmittels durch Träufeln und Fluten oder durch Vakuumtränken, Vakuumdrucktränken und Tauchen, zunächst in das Tränkmittel eingetaucht und durch Stromzufuhr auf eine Temperatur erwärmt werden, bei der an den Wicklungen eine Viskositätsabsenkung des Tränkmittels eintritt und somit eine schnelle Tränkung erfolgt und daß danach durch weitere Stromzufuhr eine Gelierung oder Teilhärtung der Harzmasse in der Umgebung der beheizten Spule herbeigeführt wird.

8. Verfahren nach Anspruch 7, **dadurch gekennzeichnet, daß** durch Steuerung der Zeit und Temperatur der Erwärmung an der elektrisch leitfähigen Wicklung während der Gelierung bzw. Teilhärtung des Tränkmittels die Viskosität des Tränkmittels in der Umgebung der beheizten Spule solchermaßen eingestellt wird, daß Füllgrade zwischen 5% und 100% erzielt werden.

9. Verfahren nach einem der Ansprüche 1 bis 8, **dadurch gekennzeichnet, daß** die Tränkmittel mindestens eine Komponente aus der Gruppe Acylphosphinoxyde, C-C-labile Stoffe, Peroxyde, Azoverbindungen, Hydrochinone, Chinone, Alkylphenole und/oder Alkylphenolether enthalten.

## Claims

1. Process for impregnating components with impregnants which are liquid at room temperature or can be liquified by heating and are curable by combined use of heat and high-energy radiation, wherein the components are impregnated at ambient temperature or in a preheated state or heated during impregnation, wherein the heating supply during impregnation is such that a partial gelation or partial curing of the impregnation occurs and are treated before, simultaneously with or after thermal curing by means of high-energy radiation, **characterized in that** non-radical polymerizable impregnants, free of monomers, are used and the polymerizable impregnants comprise dicyclopentadiene building blocks and also catalysts or catalyst mixtures which initiate polymerization both by means of heat and by means of radiation, and wherein
the components comprise windings consisting of electrically conductive materials, which are heated in the impregnant by supply of electric power to such an extent that a desired amount of impregnant is gelled and fixed and, after this gelation, the components are taken from the impregnant, ungelled impregnant is allowed to run off and is, if appropriate, cooled and recycled.

2. Process according to claim 1, wherein the impregnation is carried out by dipping, flooding, vacuum impregnation, vacuum pressure impregnation or a drip process.

3. Process according to any of claims 1 to 2, wherein the high-energy radiation used is UV, infrared and/or electron radiation.

4. Process according to claim 3, wherein infrared radiation is also employed before, simultaneously with or after curing by means of another type of energy input.

5. Process according to any of claims 1 to 4, wherein the heating of the impregnants is carried out by supply of electric power to the windings consisting of electrically conductive material.

6. Process according to any of claims 1 to 5, wherein the polymerizable impregnants comprise prepolymerized substances which are polymerizable ionically, by hydrogen transfer, by polyaddition, polycondensation, cyclocondensation and/or Diels-Alder condensation.

7. Process according to any of claims 1 to 6, wherein the electrically conductive windings are, before application of the impregnant by a drip process and flooding or by vacuum impregnation, vacuum pressure impregnation and dipping, firstly dipped into the impregnant and heated by supply of electric power to a temperature at which the viscosity of the impregnant is lowered at the windings and impregnation therefore occurs rapidly, and gelation or partial curing of the resin composition in the vicinity of the heated coil is then brought about by further supply of electric power.

8. Process according to claim 7, wherein the viscosity of the impregnant in the vicinity of the heated coil is set by controlling the time and temperature of the heating at the electrically conductive winding during the gelation or partial curing of the impregnant in such a way that degrees of fill between 5% and 100% are achieved.

9. Process according to any of claims 1 to 8, wherein the impregnants comprise at least one component selected from the group consisting of acylphosphine oxides, C-C-labile substances, peroxides, azo compounds, hydroquinones, quinones, alkylphenols and/or alkylphenol ethers.

## Revendications

1. Procédé d'imprégnation d'éléments de construction avec des agents d'imprégnation, lesquels sont liquides à température ambiante ou peuvent être rendus liquides par chauffage et durcis par une utilisation combinée de chaleur et de rayonnement de haute énergie, par lequel les éléments de construction sont imprégnés à température ambiante ou à l'état chauffé ou sont chauffés lors de l'imprégnation, l'apport de chaleur étant réglé pendant l'imprégnation ou directement après de telle sorte qu'il se produise une gélification partielle ou un durcissement partiel de l'agent d'imprégnation, et qui sont traités avant, simultanément ou après un durcissement thermique avec un rayonnement de haute énergie,
**caractérisé en ce que** les agents d'imprégnation polymérisables contiennent des éléments structuraux dicyclopentadiène ainsi que des catalyseurs ou des mélanges de catalyseurs, lesquels déclenchent une polymérisation aussi bien sous l'effet de la chaleur que d'un rayonnement et
les éléments de construction contenant des enroulements en matériaux conducteurs d'électricité, qui sont chauffés dans l'agent d'imprégnation par l'application de courant jusqu'à ce qu'une quantité souhaitée d'agent d'imprégnation soit gélifiée et fixée ainsi que les éléments de construction sont ensuite retirés de l'agent d'imprégnation après ladite gélification et mis à égoutter de manière à laisser l'agent d'imprégnation non gélifié s'écouler, lequel est le cas échéant refroidi et réutilisé.

2. Procédé selon la revendication 1, **charactérisé en ce que** l'imprégnation a lieu par immersion, noyage, imprégnation sous vide, imprégnation sous vide de pression, ou versage goutte à goutte.

3. Procédé selon l'une quelconque des revendications 1 ou 2, **caractérisé en ce qu'**un rayonnement U.V., infrarouge et/ou d'électrons est utilisé en tant que rayonnement de haute énergie.

4. Procédé selon la revendication 3, **caractérisé en ce qu'**un rayonnement infrarouge est également utilisé avant, en même temps que ou après le durcissement par un autre type d'apport en énergie.

5. Procédé selon l'une quelconque des revendications 1 à 4, **caractérisé en ce que** le chauffage de l'agent d'imprégnation s'effectue par application de courant électrique sur les enroulements en matériau conducteur d'électricité.

6. Procédé selon l'une quelconque des revendications 1 à 5, **caractérisé en ce que** les agents d'imprégnation polymérisables contiennent des substances prépolymérisées qui sont polymérisables ioniquement, par transfert d'hydrogène, par polyaddition, polycondensation, cyclocondensation et/ou condensation de Diels et Alder.

7. Procédé selon l'une quelconque des revendications 1 à 6, **caractérisé en ce que** les enroulements conducteurs électriques sont d'abord plongés dans l'agent d'imprégnation avant l'application de l'agent d'imprégnation par versage goutte-à-goutte et noyage ou par imprégnation sous vide, imprégnation sous vide de pression, et immersion, et sont chauffés par apport de courant à une température à laquelle une diminution de la viscosité de l'agent d'imprégnation se produit sur les enroulements et une imprégnation rapide a ainsi lieu, et **en ce qu'**une gélification ou un durcissement partiel de la masse de résine est ensuite réalisé(e) dans le voisinage des enroulements chauffés, suite à une alimentation en courant ultérieure.

8. Procédé selon la revendication 7, **caractérisé en ce que** le réglage du temps et de la température de chauffage des enroulements conducteurs d'électricité pendant la gélification ou selon le cas le durcissement partiel de l'agent d'imprégnation permet d'ajuster la viscosité de l'agent d'imprégnation dans le voisinage des enroulements chauffés, de sorte que des taux de remplissage entre 5 % et 100 % sont obtenus.

9. Procédé selon l'une quelconque des revendications 1 à 8, **caractérisé en ce que** les agents d'imprégnation contiennent au moins un composant parmi le groupe d'acylphosphineoxydes, substances labiles en C-C, peroxydes, composés azoïques, hydroquinones, quinones, alkylphénols et/ou éthers alkylphénoliques.
